# EUROPÄISCHE PATENTANMELDUNG

(11) **EP 0 798 584 A2**
(43) Veröffentlichungstag der Anmeldung: **01.10.1997**
(21) Anmeldenummer: 97102127.4
(22) Anmeldetag: 11.02.1997
(51) Int. Cl.: G02B 6/44

(54) **Verfahren zum Herstellen von Kabelabzweigen**

(30) Priorität: 30.03.1996 DE 19612888
(71) Anmelder: REHAU AG + Co, 95111 Rehau (DE)
(72) Erfinder: Beyer, Wolfgang, 95111 Rehau (DE)

(57) **Zusammenfassung**

Die Erfindung betrifft ein Verfahren zum Herstellen von Kabelabzweigen an durchlaufenden Glasfaser-Versorgungskabeln. Dabei wird das Glasfaserversorgungskabel geöffnet, eine Glasfaserbündeladerhülle geschnitten und eine oder mehrere freigelegte Glasfasern mit der oder den freigelegten Glasfasern aus der Glasfaserbündeladerhülle des Abzweigkabels verbunden. Für diesen Vorgang wird der Kabelmantel des Glasfaserversorgungskabels an zwei auseinanderliegenden Bereichen abgeschält. Die für den Abzweig vorgesehene Glasfaserbündeladerhülle wird in diesen beiden Bereichen wenigstens teilgeöffnet und die für den Abzweig vorgesehenen Glasfasern aus einem der Öffnungsbereiche durchgetrennt und aus dem anderen Öffnungsbereich als Faserlänge herausgezogen. Jedes freie Ende dieser Faserlängen wird mit einem zugehörigen freien Ende einer Faser aus dem Abzweigkabel verbunden.

## Beschreibung

Die Erfindung betrifft ein Verfahren zum Herstellen von Kabelabzweigen an durchlaufenden Glasfaser-Versorgungskabeln, wobei das Glasfaser-Versorgungskabel geöffnet, eine Glasfaser-Bündeladerhülle geschnitten und eine oder mehrere freigelegte Glasfasern mit der oder den freigelegten Glasfasern aus der Glasfaser-Bündeladerhülle des Abzweigkabels verbunden werden.

Bei der zunehmenden Dichte der Versorgungsnetze der Telefon-Medienanlagen und dergleichen besteht wiederholt die Notwendigkeit, an Kabeltrassen Abzweigstellen einzurichten. Vermehrt handelt es sich dabei um Glasfaser-Kabeltrassen mit jeweils mehreren Glasfaser-Bündeladerhüllen, in denen die einzelnen Glasfasern gelagert sind.

Wenn diese Abzweigstellen von vornherein eingeplant werden können, sind an den späteren Abzweigen entweder Kabelvorräte als Ring ausgelegt oder es ist bereits eine Kabelmuffe montiert. Die Verbindung der einzelnen Glasfasern an den Abzweigstellen zwischen dem Versorgungskabel und dem Abzweigkabel erfolgt bei Glasfaserkabeln im Wege des Fusionsspleissvorganges, bei dem eine Spleissung in unmittelbarer Nähe des Versorgungskabels oftmals nicht möglich ist. Um die Lichtwellenleiter-Fasern zur Fusionsspleissung in das Spleissgerät einlegen zu können, ist in der Regel eine freie Faserlänge von mehr als ca. 60 cm erforderlich.

Bei Abzweigstellen mit Kabelvorrat ist eine bequeme Spleissung außerhalb der Montagegrube, des Schachtes oder des Abzweigkastens aufgrund der vorhandenen Kabellänge und der freilegbaren Faserlänge leicht möglich, wobei jedoch als Nachteil die für den Abzweig nicht benötigten Lichtwellenleiter-Fasern nach Durchtrennen der Bündelader und Entfernen der Bündeladerhülle wieder verbunden werden müssen, da sonst die für den speziellen Abzweig gerade nicht benötigten Fasern als tote Längen im Bereich des Trennschnitts liegen bleiben.

Bei Abzweigstellen ohne Kabelvorrat muß die Spleissung im Schacht, im Abzweigkasten oder in der Montagegrube ausgeführt werden. Die dabei auftretenden Probleme sind mit den derzeitigen technischen Gegebenheiten nur unter äußersten Schwierigkeiten zu bewältigen. So muß das Fusionsspleissgerät so nahe wie möglich direkt an das festliegende Versorgungskabel herangeführt werden, was in vielen Fällen überhaupt nicht möglich ist. Darüber hinaus ist die frei verfügbare Faserlänge abhängig von der Kabelmuffenlänge, durch die das geöffnete Kabel wieder geschützt werden muß. Hierbei liegen praktikable Muffenlängen bei ca. 60 bis 70 cm, einer Länge, die für eine problemlose Spleissung oft nicht ausreicht. Schließlich sind bei dem am häufigsten verwendeten Glasfaserkabel, dem Glasfaserbündeladerkabel, bis zu 12 Lichtwellenleiter-Fasern in einem Bündeladerröhrchen untergebracht, die höchst selten alle an einer Bedarfsstelle abzweigen.

In der Regel werden bei einfachen Abzweigen nur zwei oder vier der Lichtwellenleiter-Fasern aus einer Glasfaserbündeladerhülle benötigt. Um an diese Fasern heranzukommen, muß nach dem Stand der Technik die ganze Bündelader mit z.B. allen zwölf Fasern durchgetrennt werden. Nach diesem Trennschnitt kann die Bündeladerhülle nach Durchführung eines Rundschnittes in der vorgegebenen Länge durch Abziehen von den Lichtwellenleiter-Fasern entfernt werden. Bedingt durch die nur relativ kurze Muffenlänge und der Notwendigkeit einer freien Faserlänge für den Fusionsspleissvorgang von mindestens 60 cm muß die Bündeladerhülle direkt nach der Einführung des Kabels in die Muffe auf einer Seite durchgetrennt werden. Der Nachteil dieses Vorgehens ist darin zu sehen, daß die für den speziellen Abzweig nicht erforderlichen Lichtwellenleiter-Fasern nicht mehr verbindbar und somit in dem weiterführenden Kabel totgelegt und für weitere Anschlüsse nicht mehr nutzbar sind.

Um diese Nachteile zu vermeiden ist in der DE 44 16 817 A1 ein Schneidwerkzeug angegeben, welches es erlaubt, die Bündeladerhülle längs zu öffnen, um die Lichtwellenleiter-Fasern aus der Hülle entnehmen zu können, aber nicht schneiden zu müssen. Mit dieser Technik ist es möglich, den Trennschnitt durch die Glasfaserbündeladerhülle zu vermeiden, wodurch das nachträgliche Wiederverbinden der durchlaufenden Fasern überflüssig wird.

Dadurch werden Kosten- und Zeitvorteile erzielt.

Mit dieser Anschneidetechnik wird bei Abzweigungen mit Kabelvorrat eine größere Länge der Glasfaserbündeladerhülle komplett entfernt. Es kann sich dabei um Längen bis zu einem Meter und mehr handeln. Die dadurch freigelegten Lichtwellenleiter-Fasern werden im ungeschnittenen Zustand als reine durch laufende Fasern im Reservekanal der Spleisskassette untergebracht oder als geschnittene Fasern auf die entsprechenden Fasern des Abzweigkabels gespleisst und danach ebenfalls in der Spleisskassette abgelegt. Dieser Kabelspleiss wird dann in einer üblichen Kabelmuffe geschützt.

Bei Abzweigungen ohne Kabelvorrat ist diese Verbindungstechnik nicht einsetzbar, da die Glasfaserbündeladerhülle in diesem Fall nicht auf die genannte Länge entfernt und in einer Spleißkassette abgelegt werden kann.

Hier setzt die Erfindung ein, die es sich zur Aufgabe gestellt hat, die Anschneidetechnik ohne Durchtrennen der kompletten Glasfaserbündeladerhülle auch bei Abzweigungen und Spleissvorgängen ohne Kabelvorrat einsetzen zu können. Erfindungsgemäß wird dazu vorgeschlagen, daß der Kabelmantel des Glasfaserversorgungskabels an zwei auseinanderliegenden Bereichen abgeschält wird, daß die für den Abzweig vorgesehene Glasfaserbündeladerhülle in beiden Bereichen wenigstens teilgeöffnet wird, daß die für den Abzweig vorgesehenen Glasfasern an einem der Bereiche durchtrennt und aus dem anderen Bereich als Faserlänge herausgezogen werden, und daß jedes freie Ende der Faserlänge mit einem zugehörigen freien Ende einer Faser aus dem Abzweigkabel verbunden wird.

Vorteilhaft erfolgt die Teilöffnung der Glasfaserbündeladerhülle in definiertem Abstand z.B. von ca. 1 bis 1,5 m voneinander. Die Teilöffnungsbereiche bilden dabei jeweils ein Fenster in der Glasfaserbündeladerhülle mit einer Ausdehnung von nur ca. 5 cm Länge.

Diese Fenster sind ausreichend, um die betreffenden Glasfasern in der Glasfaserbündeladerhülle nach dem erfindungsgemäßen Verfahren zu bearbeiten. Dabei würden beispielsweise im ersten Fenster auf der Abzweigkabelseite nur die zum Abzweig vorgesehenen Glasfasern durchtrennt. Im davon entfernt liegenden zweiten Fenster auf der Amtseite werden dann die durchtrennten Fasern aus der Bündeladerhülle herausgezogen. Die ungeschnittenen Fasern bleiben bei diesem Vorgehen unversehrt in der Glasfaserbündeladerhülle zurück.

Nach dem Herausnehmen der geschnittenen Faserlängen werden die geöffneten Fenster mit geeigneten Mitteln, z.B. mit zusammenklappbaren Formteilen wieder verschlossen und geschützt.

Über die herausgezogenen Glasfasern wird ein Schutzröhrchen aufgezogen, das die Fasern bis zur Spleisskassette geschützt führt. Die Fasern werden anschließend nach dem bekannten Stand der Technik auf die zugeordneten Fasern des Abzweigkabels gespleisst und in der Spleisskassette untergebracht. Dabei wird der Kabel- und Spleissschutz entweder durch eine einzige große Kabelmuffe oder durch zwei kleinere Kabelmuffen bzw. eine Kabelmuffe und eine Schrumpfmuffe hergestellt. Es kann aber auch ein Verfahren zur Anwendung kommen, bei dem die Wiederherstellung des Kabelschutzes durch Zurückschieben des verbliebenen Kabelmantelstückes zwischen den Anschnittstellen am ersten und am zweiten Fenster unterstützt wird. Dadurch kann die Kabelmantelreparaturlänge erheblich verkürzt werden.

Bei Abzweigungen ohne Kabelvorrat besteht bei Röhrenkabeln die Notwendigkeit, zuerst den Rohrzug und dann das Kabel zu öffnen, die aus der angeschnittenen Glasfaserbündeladerhülle herausgezogenen Glasfasern auf die zugeordneten Glasfasern des Abzweigkabels zu spleissen und anschließend die geöffneten Bereiche wieder zu schützen. Hier besteht die Möglichkeit, mit Hilfe einer Kombination aus einer Kabel- und Rohrmuffe den geöffneten Bereich komplett mit Kabel und Rohr über ein Bauteil wieder zu schützen.

Auf diese Weise können die abgesetzten Rohr- und Kabelenden wieder dicht gegen die Umwelt abgeschlossen werden.

Auf eine derart große Kombinationsmuffe kann jedoch auch verzichtet werden, wenn die abgesetzten Rohrenden einzeln mit mechanischen oder thermomechanischen Mitteln, z.B. mit einer Schrumpfmanschette gegenüber den innenliegenden Kabeln abgedichtet werden und die Kabelabzweigung - wie geschildert - hergestellt wird.

Die Vorteile des erfindungsgemäßen Verfahrens werden darin gesehen, daß durch das Anschneiden und partielle öffnen der Glasfaserbündeladerhüllen die Entnahme einzelner Lichtwellenleiter-Fasern zum Aufspleissen auf zugeordnete Fasern des Abzweigkabels möglich ist, ohne die ganze Glasfaserbündeladerhülle durchzutrennen, um an die innenliegenden Lichtwellenleiter-Fasern heranzukommen. Bei der Anschneidetechnik mit Kabelvorrat erspart man sich dadurch das Wiederverbinden der nicht für den speziellen Abzweig erforderlichen Lichtwellenleiter-Fasern, wodurch eine erhebliche Zeit- und Kostenersparnis eintritt und zusätzliche Leitungsdämpfungen vermieden werden.

Bei der bekannten Kabelmontagetechnik ohne Kabelvorrat ist ein Wiederverbinden geschnittener Fasern aufgrund der kurzen, damit erreichbaren Faserlänge nicht mehr möglich, weshalb hier die in der Glasfaserbündeladerhülle weiterlaufenden Fasern als nicht mehr nutzbare "tote Fasern" im Kabel verbleiben müssen. Beim erfindungsgemäßen Vorgehen entfällt aber das Durchtrennen der kompletten Glasfaserbündeladerhülle und damit auch die Notwendigkeit des nachträglichen Wiederverbindens der einzelnen Lichtwellenleiter-Fasern. Damit bleibt die weitere Nutzung der durchlaufenden, nicht geschnittenen Lichtwellenleiter-Fasern für dahinterliegende Abzweigstellen gewährleistet. Die dadurch mögliche bessere Ausnutzung der Kabelkapazität führt zu insgesamt geringeren Kabelgrößen und -kosten.

Ferner wird den Netzbetreibern durch dieses Vorgehen die Möglichkeit eingeräumt, auf langfristige Vorausplanungen zur Bereitstellung von Kabelvorratslängen zu verzichten und erst im Bedarfsfall an einer beliebigen Stelle der Kabelstrecke eine Abzweigmuffe nach dem erfindungsgemäßen Verfahren zu installieren.

## Patentansprüche

1. Verfahren zum Herstellen von Kabelabzweigen an durchlaufenden Glasfaser-Versorgungskabeln, wobei das Glasfaserversorgungskabel geöffnet, eine Glasfaserbündeladerhülle geschnitten und eine oder mehrere freigelegte Glasfasern mit der oder den freigelegten Glasfasern aus der Glasfaserbündeladerhüllte des Abzweigkabels verbunden werden, dadurch gekennzeichnet, daß der Kabelmantel des Glasfaserversorgungskabels an zwei auseinanderliegenden Bereichen abgeschält wird, daß die für den Abzweig vorgesehene Glasfaserbündeladerhülle in beiden Bereichen wenigstens teilgeöffnet wird, daß die für den Abzweig vorgesehenen Glasfasern an einem der Öffnungsbereiche durchgetrennt und aus dem anderen Öffnungsbereich als Faserlänge herausgezogen werden, und daß jedes freie Ende der Faserlängen mit einem zugehörigen freien Ende einer Faser aus dem Abzweigkabel verbunden wird.

2. Verfahren nach Anspruch 1, dadurch gekennzeichnet, daß die Teilöffnung der Glasfaserbündeladerhülle in definiertem Abstand zwischen den Öffnungsbereichen erfolgt.

3. Verfahren nach Anspruch 2, dadurch gekennzeichnet, daß die Öffnungsbereiche jeweils ein Fenster in der Glasfaserbündeladerhülle von ca. 5 cm Länge bilden.

4. Verfahren nach Ansprüchen 1 und 3, dadurch gekennzeichnet, daß die Öffnungsbereiche in der Glasfaserbündeladerhülle mit Formteilen verschlossen werden.

5. Verfahren nach Anspruch 1, dadurch gekennzeichnet, daß die herausgezogenen Faserlängen in einer Schutzhülle vom Austritt aus der Glasfaserbündeladerhülle bis zur Spleißkassette geführt werden.
